# EUROPEAN PATENT APPLICATION

(11) **EP 1 116 463 A2**
(43) Date of publication of application: **18.07.2001**
(21) Application number: 01200702.7
(22) Date of filing: 06.09.1994
(51) Int. Cl.: A47G 33/00, G07F 7/00, G07F 7/02, G07F 7/08, G07F 7/10, G06F 17/60

(54) **Offering plate accepting credit card, debit card, and envelope donations**

(30) Priority: 07.09.1993 US 117909; 28.09.1993 US 127770; 08.02.1994 US 194204; 22.02.1994 US 199072
(62) Divisional of application: 94928554.8
(71) Applicant: Ziarno, Witold A., Chicago, IL 60632 (US)
(72) Inventor: Ziarno, Witold A., Chicago, IL 60632 (US)
(74) Representative: McCarthy, Denis Alexis

(57) **Abstract**

An offering plate that permits an attender at a religious service to make a donation that consists of a an envelope donation acceptor, a credit card donation processor, and/or a debit card donation processor. The offering plate associates a donation with an account of a member, tallies information regarding a number of donations, and stores information regarding a donation, and a plurality of donations. The offering plate is part of an offering plate network which consists of an offering plate, a clergy member's terminal, a card account processor, or combination thereof. The offering plate network collects, analyzes, and displays statistical information. Various methods of obtaining donations are used with an offering plate, offering plate network, card account processor, or combination thereof.

## Description

**Technical Field:** This invention relates to an offering plate for gathering a donation at a religious service; and, more particularly, it relates to an offering plate that gathers a credit card donation, a debit card donation, a cash donation, and an envelope donation, and accepts, stores, and displays information regarding the donation.

### BACKGROUND ART

As is well known, a religious leader is typically assisted in the gathering of a donation and a member of a religious organization in the making of a donation at a religious service through the use of an offering plate.

Older versions of offering plates include woven baskets and plates made of ceramic, precious metal, such as silver, gold or platinum, wood, or other material appropriate to construct a container into which an donation can be deposited. Offering plates made of woven baskets are often referred to as collection baskets.

An offering plate is brought to a member during a religious service by an usher or circulated among members of a congregation. A member of the congregation then drops a donation onto the offering plate. A donation is most often in the form of cash or check. Frequently, donations contained within an offering plate are then deposited into a larger donation container. The larger container is then taken from the religious service for off-site processing. This type of oblation is herein called "manual, post-processed cash oblation."

A major problem of manual, post-processed cash oblation exists if the member only has with him a bill that is smaller than the bill the member prefers to donate. The member may choose to donate the smaller bill, i.e. one dollar, even though the member's preference would have been to donate a larger bill, i.e. a five, ten or twenty dollar bill. Consequently, the religious organization loses the difference between the preferred donation and the donation actually made.

A second problem exists if the member has a bill larger than he prefers to donate, i.e. a one hundred dollar bill. The member may choose not to donate the larger bill since his preference would have been to donate a smaller bill, i.e. a five, ten, or twenty dollar bill. There is virtually no convenient way for a member to get change for a larger bill during a religious service.

A third problem is that a member, and at times his entire family, finds himself searching for a bill that is his donation preference prior to a religious service. Many times the member does not find the bill he wishes to donate. In one scenario, the member may choose to donate a bill that is larger than his donation preference. However, more often than not, the member may choose to donate a bill that is smaller than his bill of choice. The religious organization again looses the difference between the preferred donation and the donation actually made. Regardless of whether the bill is larger or smaller than the bill the member prefers to donate, a secondary shortcoming of manual, post-processed cash oblation is that a member's account cannot be credited properly since there is no way to associate a particular cash donation with the member who made it. The member may choose not to donate either the larger or smaller bill since the donation does not carry a tax benefit or help satisfy his donation quota. Consequently, there exists a need for an offering plate that accommodates a member's donation preference, allows the member to obtain a tax benefit, and properly credits a member's account so that the member can meet a donation quota.

A newer version of manual, post-processed cash oblation has been developed that utilizes a donation envelope into which a cash or check donation is deposited. The donation envelope is generally a paper envelope that contains printed material including a member code, a space for marking the amount of the donation, and the date of the service attended. These features of the envelope allow for the member's account to be properly credited. This type of oblation is herein called "envelope assisted manual, post-processed cash oblation." A shortcoming of envelope assisted, manual, post-processed cash oblation occurs if a member forgets to bring his donation envelope with him to a service. If the member forgets to bring his donation envelope and instead donates cash, his account, as previously discussed, cannot be properly credited. Moreover, even if envelope assisted manual, post-processed cash oblation is utilized, a shortcoming of this type of oblation is that crediting the donation to a member's account is labor intensive. The religious organization must manually process each envelope to properly credit the particular member's account. This processing generally includes a clerical staff member or group of volunteers who must open each envelope to determine the size of the cash donation within the envelope, and/or record the information located on the cover of the envelope, to properly credit the donation to an account of a member. If the congregation contains several thousand members, this form of oblation might involve several days of processing. Hence, there exists a need for an offering plate that automatically credits a member's account.

A serious problem with both manual, post-processed cash oblation and envelope assisted manual, post-processed cash oblation occurs if a member has with him no cash but has either a debit card or credit card. In this scenario, the member is foreclosed from contributing a donation since an offering plate cannot accept a debit card donation or credit card donation. Hence, there exists a need for an offering plate that allows a member to make a debit card donation or credit card donation and thereby increases the number of donations received by a religious organization by accepting debit card or credit card donations rather than simply cash or check donations.

As is well known, a further problem with manual, post-processed cash oblation and envelope assisted manual, post-processed cash oblation is that it requires manual off-site tallying of individual donations. As such there is a need for an offering plate that tallies an individual member's donations and a plurality of donations made by different members.

It would be highly desirable to solve the variety of problems enumerated above facing members of the clergy, and members of religious organizations in gathering an envelope containing a cash donation, a credit card donation, and a debit card donation through the use of an offering plate and offering plate system which accommodates a variety of donation preferences.

It is yet another object of the present invention to provide an offering plate and offering plate system that can collect, analyze, and display statistical information associated with an individual donation or a plurality of individual donations and provide useful quantitative data. It is believed that the present invention will facilitate both free will offerings and tithes.

### SUMMARY OF THE INVENTION

These and other objects of the present invention are achieved in an offering plate and an offering plate network. The present invention provides an offering plate and offering plate network containing a credit card donation processor and/or a debit card donation processor, tallying the amount of card donations accepted, and collecting, analyzing, and displaying statistical information regarding the donation.

The present invention also provides an offering plate and offering plate network for accepting an envelope containing a cash donation, tallying the cash donation within the envelope and within a plurality of envelopes, crediting a member's account, and collecting, analyzing, and displaying statistical information regarding the donation.

The present invention also provides a method of for obtaining donations at a relgious place. These and other objects will become apparent in the course of a detailed description of the invention.

### BRIEF DESCRIPTION OF THE DRAWINGS

FIG. 1 is an overall system configuration of an offering plate network according to the present invention.

FIG. 1a is a general schematic block diagram of an embodiment of an exemplary offering plate system of the present invention.

FIG. 1b is a flow chart illustrating the functionality of an optional donation communication servicing software.

FIG. 1c is a flow chart illustrating the functionality of an optional tallier servicing software.

FIG. 1d is a flow chart illustrating the functionality of optional software for executing an exemplary donation session.

FIG. 2 is a perspective view of a bar coded envelope, an embodiment of an offering plate with an envelope donation acceptor, and a clergy member's terminal.

FIG. 3 is a perspective view of offerings and an embodiment of an offering plate with a card donation processor, a key pad, and a surface for accepting cash, check, or envelope donations.

FIG. 4 is a schematic block diagram of an embodiment of an offering plate of the present invention with a card processor, a display, and a keyboard.

FIG. 5 is a perspective view of a portable offering plate, a docking station for a portable offering plate, and a container for gathering cash and envelope donations.

FIG. 6 is a perspective view of an offering plate, a docking station for an offering plate, a surface for collecting cash and envelope donations, and a means for lockably securing an offering plate.

FIG. 7 is a top plan view of a user interface of an offering plate.

### DETAILED DESCRIPTION OF THE INVENTION

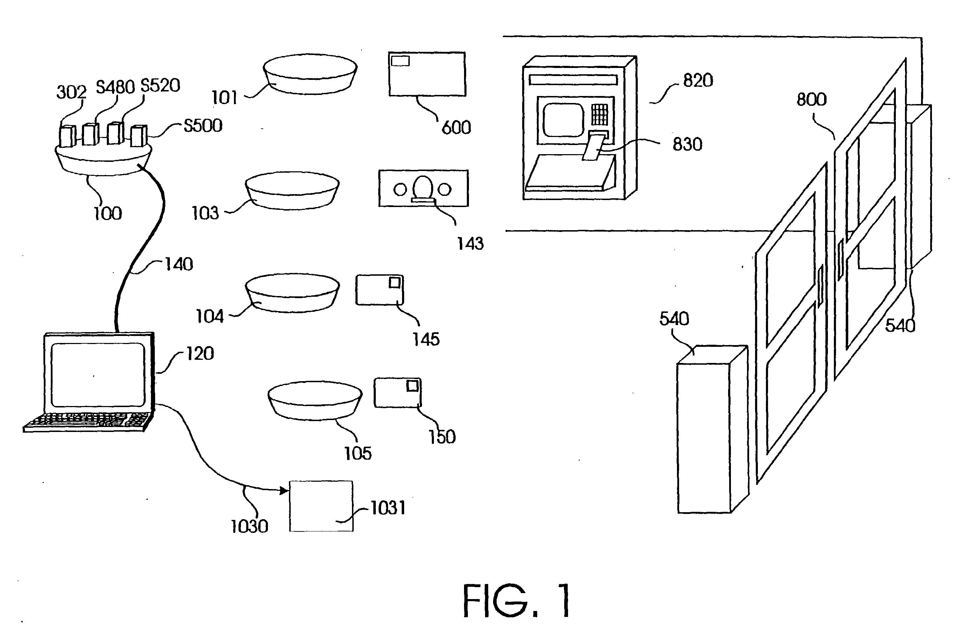

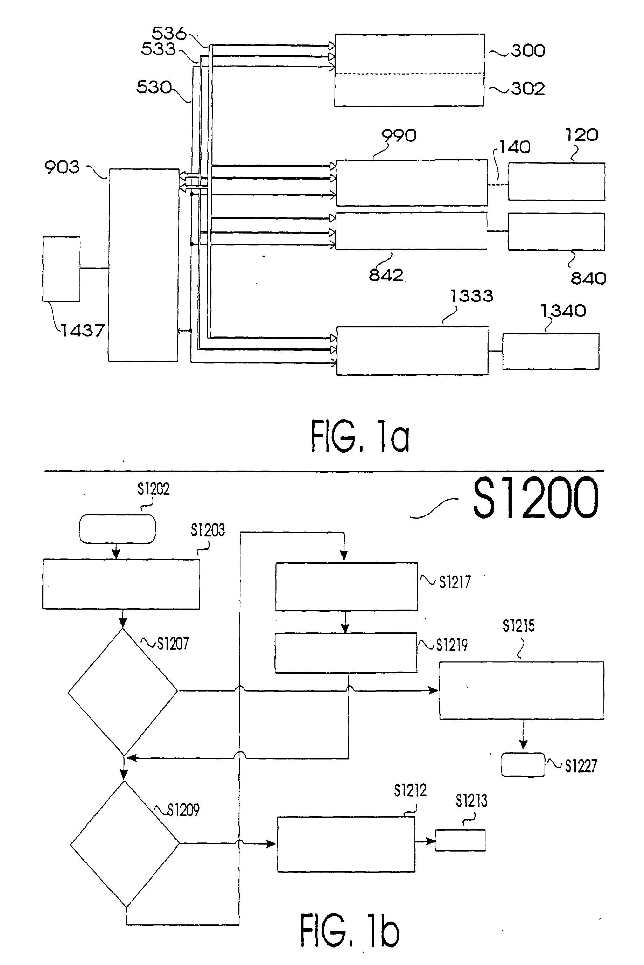

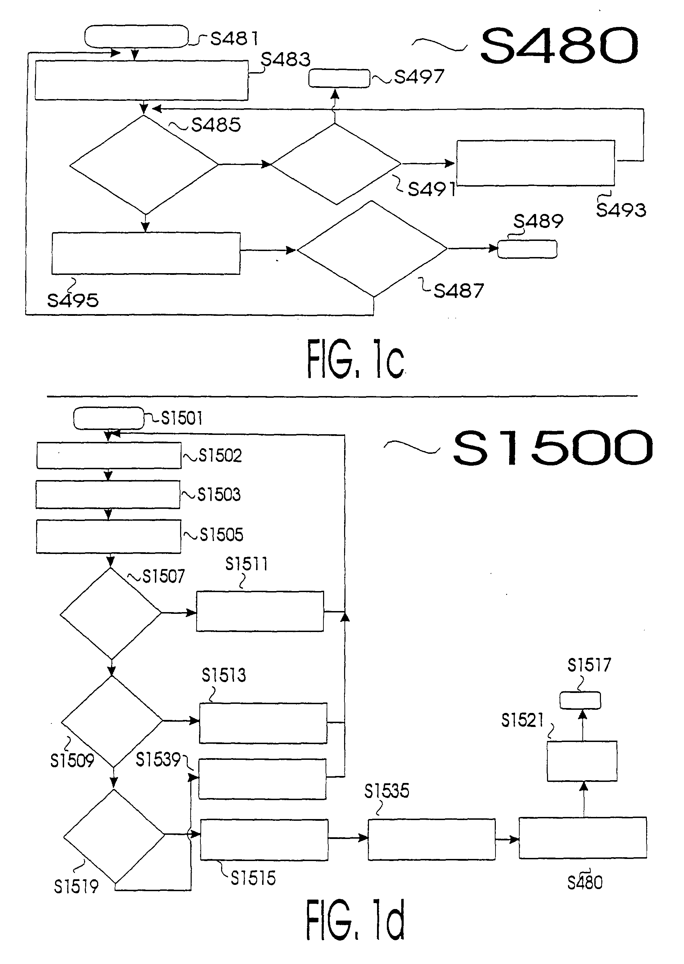

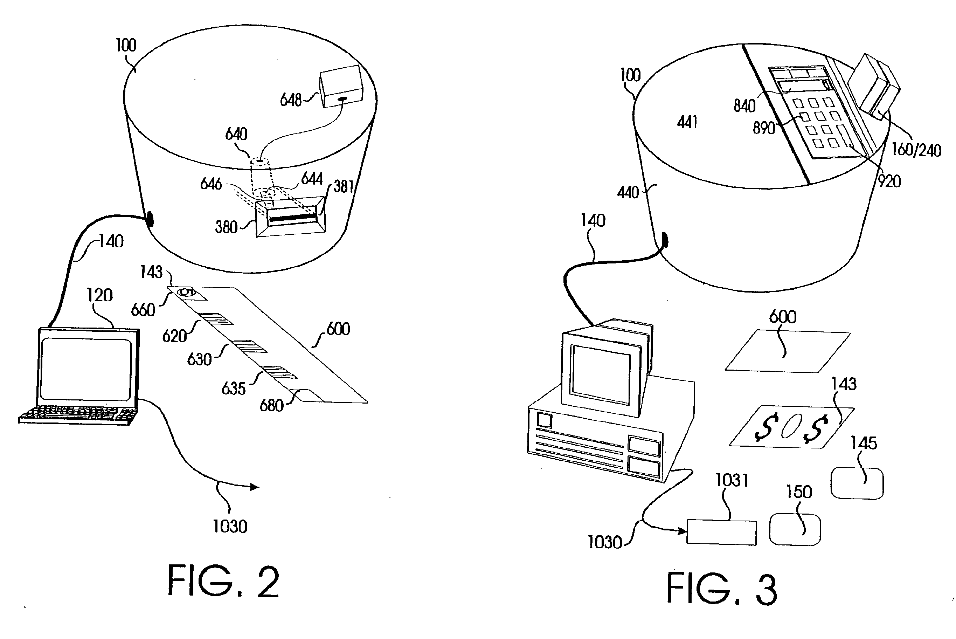

FIG. 1 is an overall configuration of an offering plate network according to the present invention. An offering plate 100 is used by a member of the clergy at a religious service, and the like, to gather a donation. As used herein, the term "offering plate" means a device that is used to gather a donation at a religious service or charitable function; the term "portable offering plate" means a device that is used to gather a donation at a religious service or charitable function, and which may be passed from one member or attender of the congregation to another during a service or charitable function; and, the term "stationary offering plate" means a device that is used to gather a donation and is permanently fixed or releasably fixed to a stationary object. An offering plate may also be used by a charitable institution for gathering an offering. As used herein, the term "member" also refers to an "attender." In one embodiment, offering plate 101 gathers an envelope 600 donation (FIG. 1 and 2). In a second embodiment, offering plate 103 gathers a cash donation 143. In a third embodiment, offering plate 104 gathers a credit card 145 donation. In a fourth embodiment, offering plate 105 gathers a debit card 150 donation. Offering plate 100 generically refers to offering plates 101-105.

Information bearing cards are used for making donations. As used herein, the term "credit card" refers to all forms of credit cards including, by way of example, VISA, Mastercard, and Discover. As used herein, the term "credit card" also refers to an American Express card. Moreover, as used herein, the term "debit card" refers to all forms of debit cards including, by way of example, a Cirrus card, a Plus card, a Maestro card, an Interlink card, and any other type of card that can be used for an electronic fund transfer. The term "card" also contemplates a private label card issued or maintained by a religious organization or an affiliate of a religious organization, and a prepaid card that can be purchased by cash, check, credit, or debit cards.

By way of further example, in an embodiment, offering plate 100 contains a card processor 160/240 that processes, and a card reader that reads, smart cards, e.g. PCMCIA cards, JEIDA/PCMCIA compliant memory cards, IC cards, GEC Card Technology LTd. IC cards, West Midlands, U.K. and/or Gemplus Card Services memory and microprocessor cards. The present invention also contemplates the use of contactless IC cards, e.g. such as those available from Mitsubishi Electric UK Ltd., Hatfield UK, and Oakwood design, Letchworth UK, and the like. Other forms of information bearing cards are also used with offering plate 100.

Generally, offering plate 100 accepts a cash donation 143, an envelope 600 containing a cash donation, a credit card 145 donation, and/or a debit card 150 donation. Offering plate 100 collects and provides information about a member and a donation. In one embodiment, offering plate 100 is portable unit. Using a communication link 140, preferably an RF (radio frequency) communication link, an infra-red or communication link or other free-propagating electromagnetic energy communication link, offering plate 100 communicates the information about the member and the donation to a clergy member's terminal 120 in one embodiment. As used herein, the term, "clergy member's terminal," refers to a terminal that can be used by anyone including but not limited to a clergy member, as for example, a secretary, clerk, volunteer, or an accountant.

In an alternate embodiment, the offering plate 100 first stores the information about the member and the donation it has accepted in a data storage 302, and then at a latter time communicates it to the clergy member's terminal 120 via communication circuitry 990 (FIG. la) and a communication link 140, e.g. after a single service or after a full day of services. The clergy member's terminal 120 might be located on-site or at some remote location. The clergy member's terminal 120 then communicates the information about the member and the donation via a communication link 1030, which by way of example, might include a telephone hookup, with a card account processor, or the like. By way of example, a card account processor includes a funds processing network, third party card processor, a bank, and the like. In another embodiment, offering plate 100 communicates information about the member and the donation directly via communication link 1030, by way of example, a telephone hookup, thereby bypassing clergy member's terminal 120 to a funds processing database, and the like. The card account of the member of the religious organization is appropriately charged the amount of the donation, or debited for the donation, as appropriate, and the account of the religious organization is augmented respectively.

By way of further example, offering plate 100 contains a credit card donation processor 160, and/or a debit card donation processor 240. Such a processor directly utilizes a cellular communication link, or other standard telephone hookup. Offering plate 100 stores a member's card account and donation information in data storage 302. After the religious service or a day of services, communication link 1030 is connected directly to the processor 160/240 and/or data storage 302, and communication circuitry 990 via communication link 1030 transfers the member and donation information to a card account processor, and the like. The card account of the member of the religious organization is appropriately charged or debited the amount of the donation and the account of the religious organization is augmented respectively. The donation can be made at an off-line offering plate. In one embodiment, offering plate 100 does nor request an authorization, or pre-authorization, for a donation at the time, or at about the time, a donation is made or attempted to be made. Rather offering plate 100, clergy member's terminal 120, a card account processor, offering plate network, or combination thereof, post processes card information and donation amount information. The term "offertory" means a length of time designated for the gathering of donations during a religious service.

Preferably, at or near an entrance or exit of a place of worship 800 is located a receipt generator 820 for the donation. The receipt generator 820 produces a receipt for a single donation or a plurality of donations. In one embodiment, offering plate 100 communicates, via a communication link, preferably an RF (radio frequency) communication link or an infra-red communication link, with the receipt generator 820. In another embodiment, offering plate 100 communicates donation and member information, via a communication link to clergy member's terminal 120. Clergy member's terminal 120 then communicates the member and donation information to receipt generator 820. The communication consists of information about the member, the donation, the date, the collection for which the donation was given, and the like. Upon receipt of the communication, the receipt generator 820 processes the information about the member and the donation to generate a receipt 830. The receipt 830 may be generated automatically by the receipt generator 820 to be picked up by the member or attender after the service, or may be generated at the request of the member or attender after the service as the member is leaving the place of worship, or may be generated for mailing or faxing to the member or attender. A member of a religious organization may desire the receipt 830 for tax purposes or for determining if the member is meeting a donation quota. The present invention also contemplates locating the receipt generator 820 on offering plate 100, and generating receipt 830 at offering plate 100.

In one embodiment, theft deterrent 540 is located at or near an entrance or exit of a place of worship 800 to deter the theft of offering plate 100. Many theft deterrents are well known in the art. By way of example, systems frequently used in retail stores might be used. The present invention contemplates that offering plate 100 contains a device that can be detected by theft deterrent 540. As such, if someone attempts to unlawfully take offering plate 100 through the entrance or exit of a place of worship 800, an alarm, or the like, might sound.

The present invention includes an optional tallier service routine S480, a set of software routines which run on offering plate 100 to tally a plurality of donations, in offering plate 100 in one embodiment. In an alternate embodiment, service routine S480 is located within clergy member's terminal 120. The service routine S480 tallies a credit card 145 donation, a debit card 150 donation, a cash donation 143, an envelope 600 containing a cash donation, and combinations thereof. Moreover, service routine S480 performs a number of arithmetic functions including but not limited to, by way of example, addition, subtraction, multiplication, division, as well as a statistical calculation. Service routine S480 is connected to commercially available accounting programs in one embodiment.

In conjunction with a printer, offering plate 100 and/or clergy member's terminal 120 may be used to generate a report commonly used for accounting purposes via service routine S480, including but not limited to a summary of total donations generated, a monthly statement, a histogram, a donation average per member, sub-group of members, or group of members.

The offering plate network of the present invention, which includes the offering plate 100, a clergy members's terminal 120, a card account processor, or combination thereof, collects, analyzes, and displays statistical information associated with an individual donation or a tally of individual donations. Offering plate 100 contains an optional statistical information collecting routine S500, a set of software routines which run on processing circuitry 903 (FIG. la). In an alternate embodiment, the statistical information collecting routine S500 is located in the clergy member's terminal 120. The statistical information collecting routine S500 collects donation data from the donation reader 1340 and associated circuitry 1333 (FIG. la), and communicates it to storage 302 (FIG. la). A statistical information analyzing routine S520, a set of software routines which run on offering plate 100 located within the offering plate 100 in one embodiment, or in the clergy member's terminal 120 in an alternate embodiment, then retrieves donation data from data storage 302 and performs arithmetic and statistical calculations thereon.

There are various types of statistical information that can be associated with a donation, and analyzed by statistical information analyzing routine S520. By way of example, one measure of the effectiveness of a particular sermon or the performance of a particular minister might be the amount of donations generated at a single service or a plurality of services. By way of further example, the particular donation habits of a member or group of members might be an indicator of the particular member, sub-group, or group of members a religious organization must target in order to maximize donations. Offering plate 100, in one embodiment, or the clergy member's terminal 120, in another embodiment, generates a report measuring the effectiveness of a sermon or a minister, the donation habits of a member or a group of members, and the number of members as measured by the number of donations given, via the above described statistical information analyzing routine S520, and associated hardware. Routine S520 might also include an interface with a commercially available computer program, a customized accounting computer program, and/or a statistics computer program.

FIG. 1a is a general schematic block diagram of the offering plate of one embodiment of the present invention which includes a donation reader 1340, donation reader circuitry 1333, power source 1437, and communication circuitry 990. Although display circuitry 842 is shown in this general embodiment of the invention, display 842 is optional.

In the present embodiment, processing circuitry 903 includes a microprocessor. However, multiple microprocessors, or a plurality of dedicated microprocessors may also be used. Processing circuitry 903 and associated circuitry are powered through power source 1437. Processing circuitry 903 interfaces with associated circuitry via an address bus 536, data bus 533, and control bus 530. Specifically, upon detection by the donation reader 1340 that a donation is being made, donation reader circuitry 1333 interrupts processing circuitry 903. Circuitry 903 responds to the interrupt by reading the buffered donation information. Circuitry 903 then stores the donation information in storage 302. In one embodiment, circuitry 903 also adds the new donation information to a running total of donation information stored in storage 302.

A variety of links and associated circuitry are used in the present invention. By way of example, link 140 is a serial link and associated circuitry in one embodiment, an RS-232 link and associated circuitry in another embodiment, modem circuitry in communication with circuitry 990 in yet another embodiment, or an RF or infra-red link and associated circuitry in another embodiment.

A variety of additions, can be added to the embodiment of processing circuitry 903 illustrated in FIG. 1a. By way of example, a cash donation reader and associated circuitry, a keyboard and associated circuitry, a touch sensitive screen and associated circuitry, a bar code reader and associated circuitry, an optical character recognition reader and associated circuitry, an electronic signature line and associated circuitry, a fingerprint scanner and associated circuitry, a card reader and associated circuitry, a coin reader and associated currency, and a bill dispenser and associated currency, and combinations thereof can be added.

The clergy member's terminal 120 drives a printer in one embodiment to produce a hard copy of a report representing data sent to terminal 120 via communication circuitry 990 located in offering plate 100. In another embodiment, service routine S1200 (FIG. 1b), runs on processing circuitry 903 located in offering plate 100. Processing circuitry 903 communicates member and donation information to communication circuitry 990 which drives a printer to print out data via a wired link, for example, an RS-232 cable. Similarly, offering plate 100 can use a serial link to drive a printer directly via communication circuitry 990.

Display circuitry 842 includes a buffer and LED drive circuitry which processing circuitry 903 can write information into in one embodiment. Display circuitry 842 responds to data written into the buffer by displaying that information via control bus 530.

Donation reader 1340 and associated circuitry 1333 includes a credit card processor, a debit card processor, a currency validator, a currency discriminator, a currency acceptor, a coin discriminator, a coin validator, a bar code scanner, or combinations thereof.

Moreover, power source 1437 is a battery power source in one embodiment. Power source 1437 is a portable rechargeable power source in another embodiment. Preferably, the battery is a rechargeable source, and is located on the offering plate 100 so as to be easily accessible during replacement or recharging thereof. In another embodiment, power source 1437 includes a hardwired power supply.

FIG. 1b is a flow chart illustrating the functionality of an optional donation communication servicing software and associated hardware of an exemplary offering plate of the present invention. Optional donation communication circuitry servicing routine S1200 is a set of software programs which run on offering plate 100. Routine S1200 is entered when a communication is received by communication circuitry 990 in one embodiment. Upon entering this routine (S1202), communication circuitry 990 enters a retrieve the communication routine S1203 to retrieve the communication. The communication consists of a request for donation information in one embodiment. By way of example, the request includes a request for a cash donation entry, an envelope donation entry, a bar code data entry, a card entry, a donation entry, or combinations thereof. In yet a further embodiment, the request might include a request for a fingerprint entry, a donation entry, or a combination thereof. In another embodiment, the communication is a request to download. The circuitry 990 then tests to determine if this is a request to download by executing routine S1207. If yes, then a test to determine if the data storage is empty using routine S1209 is conducted. If yes, an end of data message using routine S1212 is sent, and routine S1200 is concluded (S1213).

If there was a no in response to routine S1207, routine S1215 is executed. Routine S1215 transmits a please resend request to download message, and then ends (S1227) routine S1200. In one embodiment, the request to download may include a security code or other security information. Furthermore, the circuitry 990 may test to see if the proper security code is present within the request to download before downloading any information.

If there was a no in response to routine S1209, routine S1217 is executed to obtain the donation entry. The donation entry can come from the cash donation acceptor 320, the envelope donation acceptor, card donation processor 160,240, or coin donation acceptor 1100, or storage 302. Routine S1219 to send the donation entry is entered. Routine S1219 loops around to routine S1209 until there is no more data to be communicated. Routine S1200 is entered when there is communication between offering plate 100 and clergy member's terminal 120 in one embodiment. In an alternate embodiment, routine S1200 is entered when there is communication between offering plate 100 and a printer. In yet another embodiment, routine S1200 is entered when there is communication with a card account processor, e.g. third party card processor, and the like.

In an embodiment, a plurality of donation data, comprising card information from an information bearing card and associated numerical donation amount information are grouped together. The grouped information is then transmitted to a card account processor. The card account processor authorizes a sub-group of donation data for further processing. Optionally, the authorized and unauthorized donation data are transmitted to offering plate 100, clergy member's terminal 120, a religious organization database, or combination thereof for exclusion of the unauthorized donation data. The unauthorized donation data are excluded from the group, and the authorized donation data, e.g. card information and donation amount information, are transmitted to the card account processor. Means responsive to information sent via the transferring means enters a debit representative of the donation amount information to an account of the attender. Means responsive to information sent via the transferring means enters a credit representative of the donation amount information to an account of an organization.

FIG. 1c is a flow chart illustrating the functionality of an optional tallier servicing routine S480 and associated hardware of an embodiment of an offering plate of the present invention. Routine S480 is entered (S481) in order to tally a plurality of donations, which may be stored in the data storage 302 along with associated member information. An entry is read from storage 302 via routine S483. The entry is then tested to determine if the entry is a donation to be tallied by routine S485. By way of example, donations that are tallied include cash donations 143, envelope donations 600, credit card 145, and debit card 150 donations. If a yes is given in response to routine S485, then the entry is added to a register by routine S495. In one embodiment, routine S495 contains subroutines that pigeon hole a cash donation 145 entry into one register, an envelope 600 donation entry into another register, a credit card 145 donation entry into yet another register, and a debit card 150 donation entry into yet another register. Each respective register has a particular type of entry added, or a combination thereof, and then routine S487 is executed in one embodiment. In another embodiment, there is only one register to which each type of entry is added, then routine S487 is executed. Routine S487 tests to determine if the data storage is empty or if the last data entry has been read. If yes, routine S480 ends (S489). If no, there is a loop back and routine S483 reads the next entry. If no is the answer to routine S485, routine S491 tests to see if the data storage is empty. If yes, routine S480 is concluded (S497). If no, routine S493 reads the next entry in data storage 302 and loops back to routine S485.

FIG. 1d is a flow chart illustrating the functionality of optional software and associated hardware for executing a donation session. By way of example, optional routine S1500 may be entered (S1501) whenever a donation, or member information, is detected by donation reader 1340 (FIG. la) by any other addition, e.g. keyboard 107 or a touch sensitive screen, or combinations thereof. Routine S1502 waits until an entry is detected by a reader or addition. Routine S1503 reads the entry. Routine S1505 adds the entry to session information. Routine S1507 tests to determine if the session information contains a donation amount. Exemplary donation amounts are a cash donation 143 entry indicating the denomination of a bill, keyboard 107 entry indicating a donation amount, a bar code 630 (FIG.2) entry indicating a donation amount, a coded envelope entry indicating a donation amount, a coded card entry indicating a donation amount, or a combination thereof. If no, routine S1511 requests a donation amount and S1511 loops around to Routine S1502. In one embodiment, routine S1511 displays a message for a time out period. Routine S1511 can involve a single screen or multiple screen display depending on the type of entry device used. If the test of routine S1507 results in a yes, routine S1509 is executed. Routine S1509 determines if the session information contains member information. By way of example member information includes a member bar code 620 (FIG. 2), a code associated with a member entered via keyboard 107, member information on a coded envelope, member information on a card, a fingerprint of a member, or a combination thereof. If no, routine S1513 requests member information and loops back to routine S1502. If yes, Routine S1519 is executed and determines if the session information contains both member and donation information. If yes, routine S1515 associates the member and donation information. In one embodiment, Routine S1535 stores the associated member and donation information. In another embodiment, optional tallier service routine S480 is executed. Routine S1521 clears the session information. Routine S1500 ends (S1517). If the result of routine S1519 is no, routine S1539 requests donation amount and member information and loops back to before Routine S1502. Again, this routine may involve single or multiple screens depending on the input device.

In one embodiment, optional service routine S480 communicates information regarding the total amount of cash donations 143 gathered via communication link 140, preferably an RF (radio frequency) communication link or an infra-red communication link, to the clergy member's terminal 120 for further processing as will be discussed below.

The present invention contemplates that a member attending a church service located in a part of the country other than his regularly attended church service might have his religious organization account credited in his regularly attended church. The advantage of this feature will be readily apparent to members who frequently travel on business or pleasure.

Generally in all embodiments where a keyboard is present, keyboard circuitry 109 scans keyboard 107 to determine if a key has been hit. Keyboard 107 refers to both keypad 890 and entry key 920, or combination thereof. Key board 107 might include a cancel key, and keys with other alpha-numeric text. In another embodiment, keyboard 107 might contain a key that represents a specific denomination amount, e.g. five dollars ($5) or ten dollars ($10). Processing circuitry 903 interfaces with keyboard 107 and associated circuitry 109 via an address bus 536, data bus 533, and control bus 530. Once a key has been hit on keyboard 107, that key information is moved into a buffer and interrupts processing circuitry 903 to communicate that the key is ready. Circuitry 903 responds to the interrupt by reading the buffered keyboard information. Circuitry 903 then stores the keyboard information in storage 302 if necessary. By way of further example, the keyboard information may consist of a donation amount, an account number of a member, an authorization code, and the like.

FIG. 2 is a perspective view of an embodiment of an offering plate with an envelope donation acceptor 380. A member of a religious organization feeds an envelope 600 containing a cash donation into slot 381 forming part of the envelope donation acceptor 380. As used in relation to this figure the term "cash donation" also includes a donation by check. The envelope donation acceptor 380 takes in the envelope 600 containing a cash donation. This can be accomplished by pulling in envelope 600 containing a cash donation in by a transport mechanism such as that commonly encountered in vending machines, and as previously described. Alternatively, a member may manually insert the envelope 600 containing a cash donation through slot 381.

A donation associator allows a member's account to be properly credited for the donation. By way of example, the present invention contemplates that a donation associator for associating an envelope containing a cash donation with an account of a member may take on several forms, including but not limited to a bar code, e.g. 620, and bar code reader 640 and associated circuitry, an optical character recognition reader and associated circuitry, or a combination thereof. The present invention further contemplates using a reader that reads a coded envelope.

In one embodiment, the envelope 600 containing a cash donation may contain a member bar code 620 that is associated with information about a member's account. The envelope 600 containing a cash donation may also contain a bar code representing a cash denomination 630, and/or a collection bar code 635. By way of example, a collection bar code 635 is used to designate the specific collection to which a donation is made if there are multiple collections during the same religious service. By way of further example, the member bar code 620 may be associated with the member's account.

In one embodiment, the religious organization may choose to give a member an envelope containing only a member bar code 620 imprinted on envelope 600. The present invention contemplates that the member can then add an adhesive label containing a bar code representing a cash denomination 630 to envelope 600. Moreover, on the occasion of a special collection, a member can add an adhesive label containing a collection bar code 635 which can be affixed onto envelope 600. The present invention also contemplates that other information can be associated with a bar code which can be affixed on envelope 600. By way of example, a bar code can be associated with a special religious prayer request, and the like, or associate with a donation in memory of a deceased individual.

If bar codes are used on envelope 600, a bar code reader 640 reads; by way of example, the member bar code 620, and communicates information to bar code reader circuitry 648 where it is stored. The present invention also contemplates that a bar code reader 640 reads information from a collection bar code 635 and a bar code associated with a cash denomination 630. In one embodiment, bar code reader 640 and bar code reader circuitry 648 communicates this information to the clergy member's terminal 120 via communication circuitry 990 and communication link 140 or to processor 903 for processing, e.g. via service routine S480. In another embodiment, the clergy member's terminal 120 communicates this information via communication link 1030 to a central database where a plurality of donations might be processed from individual religious organizations, e.g. 50 individual churches belonging to one religious denomination.

Numerous bar code readers are commercially available from vendors at a comparatively low price. By way of further example, a bar code reader might be an ordinary pen-type bar code reader. Since the construction and operation of types of bar code readers are well known, a detailed description is omitted.

Additionally, a transparent film 680 might cover opening 660. As used herein, the term "transparent film" refers to any material through which a denomination or other distinguishing feature of a bill can be recognized, including a translucent material. The present invention further contemplates that the envelope 600 containing a cash donation may be entirely made out of a material that is transparent.

Although the exemplary described embodiment incorporates a pen type bar code reader, the offering plate 100 might incorporate any type of data gathering device equipped with a bar code reader.

The present invention contemplates that a member may wish to make a donation that includes a plurality of cash donations 143. By way of example, a member may wish to donate $36. The member inserts a cash donation 143 including a one dollar, five dollar, ten dollar, and twenty dollar cash donation into separate compartments within envelope 600.

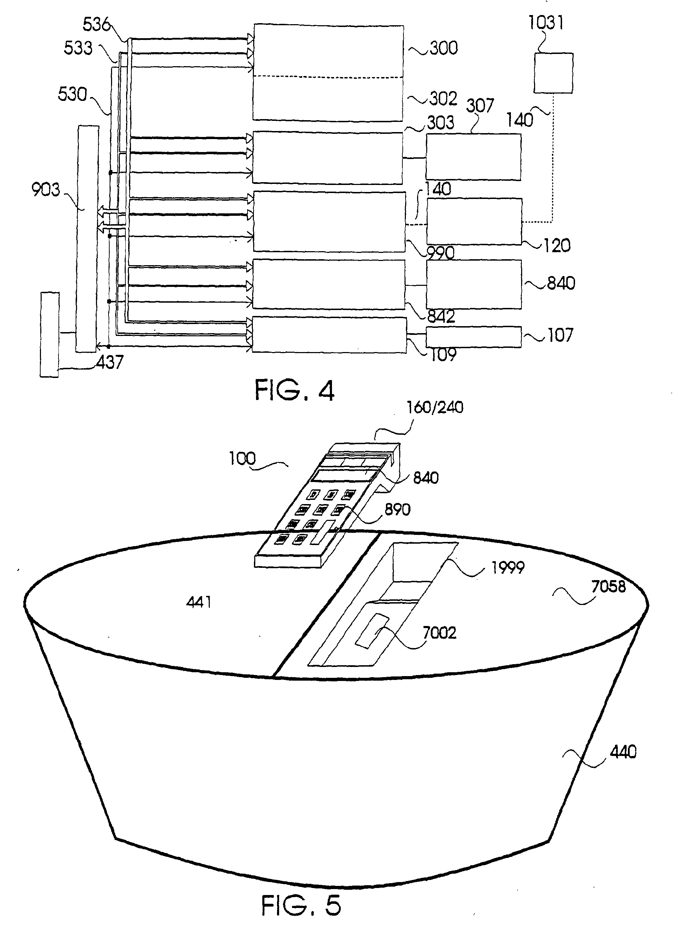

FIG. 3 and 5 are perspective views of embodiments of an offering plate 100 with a card processor. A card processor may be a credit card donation processor 160 and a debit card donation processor 240, e.g. processor 160/240. The present invention contemplates that offering plate 100 might only contain a credit card donation processor 160. Alternatively, the present invention also contemplates that offering plate 100 might only contain a debit card donation processor 240. In yet a further embodiment, the present invention contemplates that both a credit card donation processor 160 and a debit card donation processor 240 might be located on offering plate 100 at different physical locations.

In one embodiment, card processor 160/240 includes a card slot defining member which defines a card slot. A member swipes or passes a credit card 145 through the card slot of a credit card donation processor 160. Alternatively, a member swipes a debit card 150 through a card slot of a debit card donation processor 240. Moreover, as used herein, the term "card donation processor" when used without the descriptors "credit" or "debit" refers to either a credit card processor, debit card processor, or both a credit and debit card processor.

In a preferred embodiment, offering plate 100 has both a credit card donation processor 160 and a debit card donation processor 240 utilizing a single processor that discriminates between the type of donation made. An exemplary credit and debit card processor 160/240 is disclosed in United States Patent No. 5,012,077.

In one embodiment, the card donation processor 160/240 communicates with key pad 890. Upon receiving the communication that a card donation is to be given, key pad 890 reveals a key associated with a cash denomination. By way of example, the key associated with a cash denomination might appear to disclose a one, five, ten or twenty dollar symbol as described below. The member presses the key associated with a cash denomination that is the preferred amount of his donation, and presses entry key 920.

It will be appreciated that most credit card 145 donation amounts will not require an authorization by signature or numeric code. Consequently, in one embodiment, the present invention contemplates that a member will simply need to swipe or insert an information bearing card 145/150 through, or into, card processor 160/240, as required, and enter the amount of his donation by pressing a key associated with a cash denomination in making his donation on key pad 890. In an alternate embodiment, the present invention contemplates that a member will have pre-authorized the religious organization to collect a donation amount. Pre-authorization might include an agreement with the organization that a member authorizes the donation of a given amount once a certain action takes place, i.e. the member swipes card 145/150 through card processor 160/240 at offering plate 100.

In the case of a debit card 150 donation via offering plate 100, the member might authorize the religious organization to use a secret identification number associated with his debit card account in order to allow the organization to automatically obtain the donation without seeking subsequent authorization from the member. In this scenario, the member need only perform the action of swiping or inserting, as reqired, card 150 through processor 160/240 on offering plate 100 to make a donation.

The present invention also contemplates that a member might wish not to disclose a member's card 145/150 account authorization code to the religious organization for security reasons but still might wish to make a card 145/150 donation. In this case, the present invention contemplates that the clergy member's terminal 120, or offering plate 100, has an input 307 that allows for entry of the member's card 145/150 account authorization code so that it is encrypted and only decipherable and usable by the clergy member's terminal 120 or offering plate 100 for processing the card 145/150 donation. An advantage of this feature is added security for the member. The present invention also contemplates using a touch sensitive screen to input, a member's name, credit card and/or debit account information, the collection for which the donation is made if there are multiple collections, and the like.

A single or a plurality of associated card 145,150 donations is stored in data storage 302. A set of software routines has first associated a member's card account information with a donation. The member has made a number of card donations within a specified time period which are stored and tallied by a set of software routines. Optional small donation service routine downloads a plurality of a member's card donations once a card donation amount threshold is reached.

By way of example, a member may wish to make a card donation of two dollars weekly. However, a communication charge between an offering plate 100 and a central database card processor, might be relatively expensive and as such would make the transaction cost of processing one two dollar weekly card donation prohibitive. However, once a number of two dollar weekly donations are received, i.e. over a period of two months (sixteen dollars), communication charges might be reasonable for the size of the transaction. Moreover, the longer the religious organization waits to process the donations, the greater the decrease in transaction costs relative to donation size.

Optional Small donation service routine is entered at a convenient interval, by way of example, every week, or every month. A routine reads, and initial, and the next card donation amount for one member from storage. A routine tests to determine if a, single, or the sum, of a plurality of donation amounts is greater than a threshold amount. In one embodiment, a threshold amount is chosen to make the transaction costs of processing a card donation reasonable in comparison to the card donation amount. If yes, the entry is downloaded via a routine. In one embodiment, the entry is downloaded via communication circuitry 990 to a third party card processor, and the like. Another routine is then executed. This routine tests to determine if the end of the donation amount information in storage has been reached for a member. If yes, the routine is concluded. If no, the routine is executed again. In one embodiment, a routine reads a card donation amount for another member.

In one embodiment, key pad 890 can be used to associate a donation amount with an account of a member. As described above, the credit card donation processor 160 communicates with key pad 890. Upon receiving the communication that a card donation 145/150 is to be given through the card donation processor 160/240, or an envelope 600 containing a cash donation is to be given through the envelope donation acceptor 380, key pad 890 reveals a key associated with a cash denomination 900, e.g. a key associated with a cash denomination of five dollars. By way of further example, the key associated with a cash denomination appears to disclose a one, five, ten or twenty dollar symbol. The member presses the key associated with a cash denomination 900, and presses entry key 920. The present invention also contemplates that key pad 890 may contain a key that is also associated with the number of the collection to which a donation is made, and the like.

In another embodiment, the offering plate 100 might adopt pen-based input or touch sensitive screen input. A Pen and screen provide a member a substitute for key pad 890. By way of example, a member may use a pen to write in the amount of donation or other alpha-numeric text on a screen. Alternatively, a symbolic key associated with a cash denomination might appear on a screen. The member then uses his finger to touch the symbolic key associated with a cash denomination and designates the donation amount. If a member's signature is required, a pen can also be used with a screen as an electronic signature line. In one embodiment, the member's signature entered on a screen can be collected, stored, and/or transmitted by card processor 160/240 along with donation information to a third party card processor via a communication link 1030. Alternatively, this information might be sent to clergy member's terminal 120 via communication link 140 for further processing, storage, and/or transmittal via communication link 1030.

FIG. 3 is a perspective view of an embodiment of an offering plate 100 with a card donation processor 160/240. In this embodiment, a container 440 supports a credit card donation processor 160, a debit card donation processor 240, or combination thereof. In yet a further embodiment, the present invention contemplates that both a credit card donation processor 160 and a debit card donation processor 240 might be located on offering plate 100 at different physical locations.

A member drops a cash donation 143 or an envelope 600 containing a cash donation into container 440. Container 440 has an open area 441 on its top surface. Alternatively, open area 441 may be located on a side surface. Area 441 is of a size for receiving a cash donation 143 or envelope 600. The cash donation 143 or envelope 600 containing a cash donation might then be processed using manual post processed cash oblation. Alternatively, a member might make a donation using credit card 145 or a debit card 150 as previously described.

The present invention contemplates that container 440 may be constructed from any material suitable to collect cash donations or envelope donations. Preferably, container 440 is constructed from a woven material, or a metal. Container 440 is of a size and weight permitting an attender at a religious service to pass plate 100 to the attender sitting next to him in the same pew. In an alternate embodiment, container 440 might also be mounted to a pew. The present invention also contemplates using this embodiment in a religious funeral service.

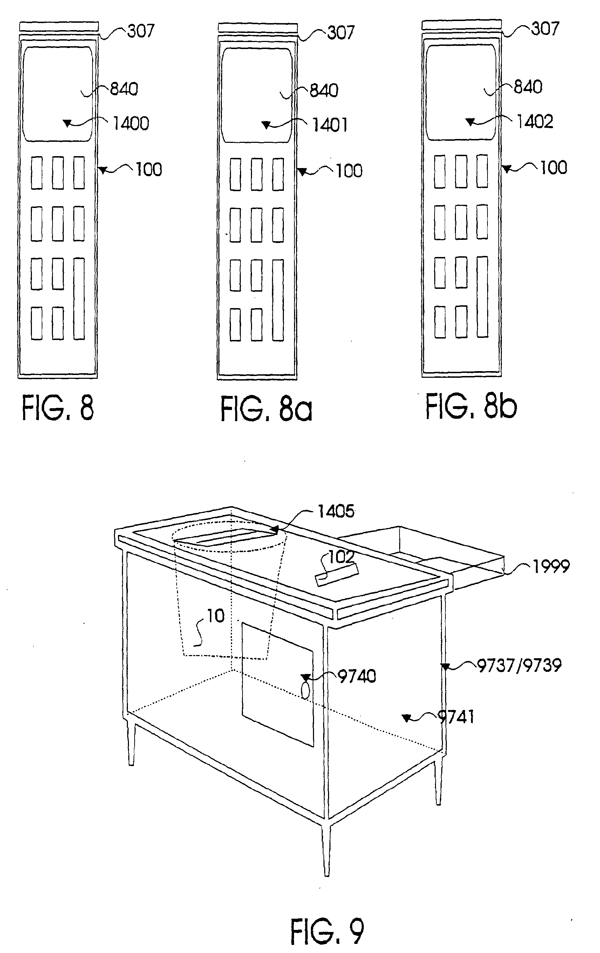

Container 440 can optionally comprise an envelope box 9737 with a locking cash drawer 9740 or a deposit box 9739 (FIG. 9). The envelope box 9737 and deposit box 9739 have optional slot 102 disposed thereon for the deposit of cash 143 and envelope donations 600 and an inner storage volume 9741. Deposit box 9739 may have the addition of an opening baffle 1405 for security, a locked cabinet door 9740 for access said cash donations, and optional removable bag 10 for retaining a cash donation 143 (not shown). In one embodiment, envelope box 9737 and deposit box 9739 comprise docking station 1999, offering plate 100, or combination thereof. Optionally, envelope box 9737 and deposit box 9739 comprise a means for lockably securing offering plate 100 thereto. The combination of envelope box and offering plate 100, and/or deposit box and offering plate 100 are optionally on an offering plate network.

FIG. 4 is a schematic block diagram of an offering plate of the present invention, a card reader 307 and related circuitry 303 addition, and a key board 107 and related circuitry 109 addition. In this embodiment, offering plate 100 acts as a stand alone unit for accepting card 145, 150, cash 143, and envelope 600 donations. For example, in Figure 3 communication link can be a wireless communication link. Further, in one embodiment, data storage 302 stores in the range of 10 to 1000+ donation transactions, including card information and associated donation information, the particular storage requirements being dictated by the number of attenders expected to use offering plate 100. Preferably, data storage can store approximately 200 transactions.

The present invention also contemplates that in other embodiments swiping a credit card 145 or debit card 150 might not be required. As used herein, the term "swiping" refers to any method for communicating information on a card to a card reader 307. Another embodiment of the invention has the features enumerated above in FIG. 1, with the addition of a receipt generator 820 at offering plate 100.

A member may wish to obtain receipt 830 directly after he has made a donation. After entering his donation, by way of example, a cash donation 143, display 840 displays a message asking the member is he wishes a receipt for his donation. The member presses a key representing yes on keypad 890. Receipt generator 820 prints receipt 830 for the member. The receipt contains the member's name, the amount of the donation, the date of the donation, and/or the collection for which the donation was given.

As viewed in FIG.S 8, 8a, and 8b, offering plate 100 is used to solicit a donation at religious place, or generally by a charitable organization at some other location. The donation is made by an information bearing card, e.g. 145, 150. A method comprises the steps of: prompting an attender to pass an information bearing card, e.g. through a card reader 307; prompting an attender to enter information representative of a donation amount; and, optionally prompting said attender to verify said information representative of a donation amount. Verification may include a prompt to press a key representative of a "YES," "NO," or "ENTER." Prompting is accomplished by displaying an alpha-numeric message on display 840. Optionally prompting may be accomplished by providing alpha-numeric text disposed on offering plate 100, offering station 7000, or combination thereof. Further optional prompts may include a prompt for the address of and attender, a prompt requesting a special intention, or combination thereof. Further an optional message prompt may include the following text portions: "SLIDE CARD THROUGH CARD READER 1400," "ENTER DONATION AMOUNT 1401," "PRESS YES 1402," "ENTER OFFERING AMOUNT," "ENTER CONTRIBUTION," a variation on the themes of the text, or combination thereof.

FIG. 5 is a perspective view of a portable offering plate 100, a docking station 1999 for portable offering plate 100, and a container 440 for gathering cash and envelope donations.

Docking station 1999 allows for an offering plate 100 to be docked. In one embodiment, offering plate 100 is communicatively attached to docking station 1999 to allow information from an information bearing card and/or donation amount information to be transmitted via docking station 1999 to, by way of example, terminal 120 (via communication link 140), to a card account processor 1031 directly via communication link 140 (FIG. 4), to another offering plate 100, or a combination thereof. In one embodiment, a plurality of docking stations 1999 are networked on an offering plate network.

Docking station 1999 can also be used to communicatively attach a card reader 307, related circuitry 303 (FIG.4), means for entering a donation amount, means for storing donation amount information, means for storing card information from an information bearing card, means for transmitting information from an offering plate, or combination thereof, to a container 440 (FIG. 5 and 8) for collecting cash donations, envelope donations, or combination thereof. Moreover, a offering plate 100 or docking station 1999 may also be located on the interior or exterior of a building and/or a permanently mounted to an envelope collection box (FIG. 8). In one embodiment, docking station 1999 provides a means for energizing offering plate 100. Optionally, docking station 1999 has a port 7778 for recharging a power supply on offering plate 100. Port 7778 is optionally used for communicatively attaching offering plate 100 to an offering plate network, where the offering plate network facilitates that transmittal of donation information and card information to a card account processor.

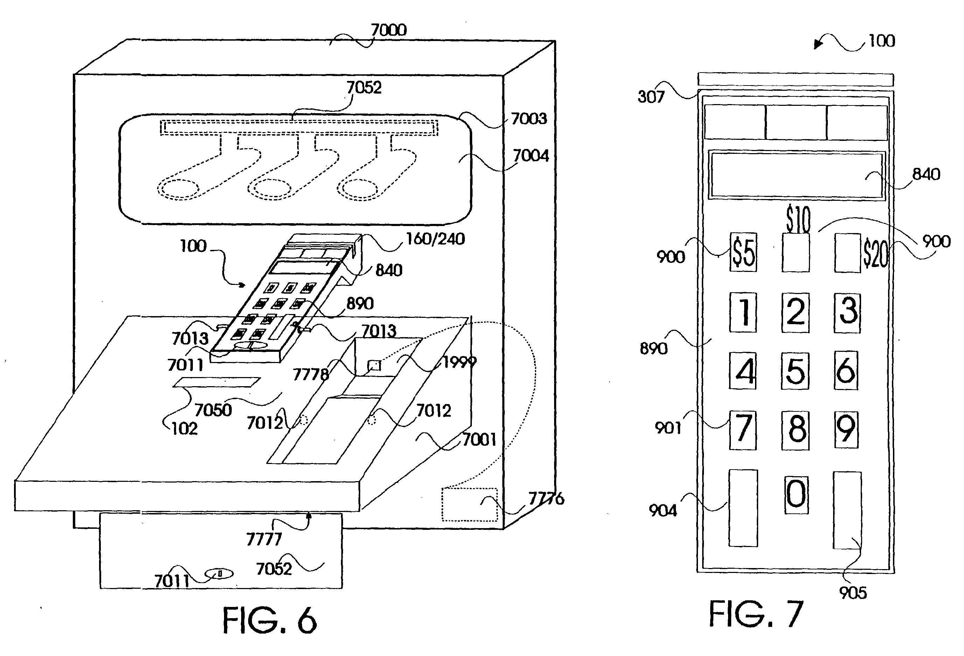

In another embodiment docking station 1999 includes a slide in mounting unit (not pictured) onto which offering plate 100 is connected to container 100 (FIG. 5) or offering station 7000 (FIG. 6). In an embodiment, offering plate 100 slides into docking station 1999 (FIG. 5 or 6), and plugs into the docking station 1999, e.g. into port 7778 (FIG. 6). In an alternate embodiment, docking station 1999, and/or offering plate 100 contain a base mount (not pictured). The base mount includes a plate on the bottom or side of offering plate 100. In one embodiment, the plate is offset from the bottom of offering plate 100. The plate allows offering plate 100 to slide into docking station 1999.

In an alternate embodiment, offering plate 100 is permanently mounted in docking station 1999. Optionally, docking station 1999 has a surface 7058 (FIG. 5) or surface 7050 (FIG. 6) on which a portable card processor 160/240 rests without an electrical connection. Offering plate is taken from the docking station 1999 surface 7050, 7058 after a donation session and linked to a card account processor database 1031 via communication link 140. In one embodiment, docking station 1999 can be integrally molded into the body of container 440. Optionally, docking station 1999 comprises an optional indentation of a size and shape to retain offering plate 100 on surface 7058, container 440, or combination thereof.

In yet another embodiment, offering plate 100, and docking station 1999 contain complementary electrical connectors (not pictured), the connection of which provides sufficient connection to provide a communication link to move data. Numerous communication links discussed above can also be used to provide connections to move data.

In various embodiments, docking station 1999, terminal 120, offering plate 100, card account processor 1031, or a combination thereof, are on the same network. Downloading information from the devices on the network is directed to a terminal 120 in one embodiment, to a modem in another embodiment, or to a card. account processor database in yet another embodiment.

Docking station 1999 (FIG. 5 and 6) is constructed of plastic, metal, wood, or any other material appropriate to create a surface on which offering plate 100 can rest. Docking station 1999 is fastened to the side of container 440 via a fastening means (not pictured). By way of example, a fastening means includes adhesive, rivets, snaps, velcro, screws, or combination thereof. It will be appreciated that this embodiment of the invention allows container 440 to be retrofitted with offering plate 100 in order to allow card 145/150 donations to be obtained. In an alternate embodiment, container 440 includes a clip (not pictured) or other appendage (not pictured) allowing for the offering plate 100 to be fixed thereto or removable attached thereto.

Optional hook and loop fastener 7002 comes into contact with a sister hook and loop fastener (not pictured) disposed on the underside of offering plate 100 to releaseably connect offering plate 100 to docking station 1999 (FIG. 5 and 6), surface 7058 (FIG.5), or surface 7050 (FIG.6).

FIG. 6 is a perspective view of an offering station 7000 comprising offering plate 100, optional docking station 1999, optional container 7001 for collecting cash and envelope donations, and an optional means for lockably securing an offering plate 100 to docking station 1999, surface 7050, or combination thereof.

Offering station 7000 has a surface 7050. Offering station has optional aperture 7003 through which light source 7052 radiates light. Lens 7004 is interposed between aperture 7003 and source 7052. Lens 7004 has alpha-numeric text disposed thereon in one embodiment, e.g. the name of a religious organization. Offering plate 100 rests on surface 7050 removably attached with a hook and loop fastener as described in FIG. 5 or lockably disposed in docking station 1999 by way of a locking mechanism 7011. Pins 7013 retract or enter apertures 7012 in response to locking mechanism 7011 being locked or unlocked. A variety of locking mechanisms and assemblies for lockably securing offering plate 100 are known in the art. The present invention contemplates that offering plate 100 is optionally lockably disposed on surface 7050. These locking assemblies may be used when offering plate 100 is secured to container 440 (FIG.5), an envelope collection container (FIG.8) or combination thereof. Mechanical and electronic locking assemblies are used to lockably secure offering plate 100. By way of example, these may-include lock and key combinations, padlocks, and the like. Port 7778 is used with a complimentary port on offering station 100, a communication link 140, or combination thereof, to energize offering plate 100 via optional power supply 7776.

FIG. 7 is a top plan view of a user interface of an offering plate 100. A card reader 307 for reading card information from an information bearing card, and display 840 are disposed on offering plate 100. A means for entering donation amount information comprises, a key representative of a fixed donation amount 900, e.g. a key representative of ten dollars, a key representative of a single digit integer 901, a confirmation key 904, a negation key 905, or combination thereof. Key 904 may represent a "yes" key. Key 905 may represent a "no" key. It will be appreciated that key 900 allows for an attender to make a donation rapidly. Key 900 has optional information representative of two or more currencies of different countries.

While only a few, preferred embodiments of the invention have been described hereinabove, those of ordinary skill in the art will recognize that the embodiment may be modified and altered without departing from the central spirit and scope of the invention. Thus, the preferred embodiment described hereinabove is to be considered in all respects as illustrative and not restrictive, the scope of the invention being indicated by the appended claims, rather than by the foregoing description, and all changes which come within the meaning and range of equivalency of the claims are intended to be embraced herein.

## Claims

1. A portable offering plate for use in a religious place to permit an attender to make a donation by an information bearing card, comprising:
(a) a card reader having a card slot for receiving a card, said card reader disposed for providing said card slot in an area for use by the attender, said card reader powered by a portable power supply;
(b) a plate container of a size and weight for allowing the passing thereof from one attender to another attender, said plate container for having means for supporting said card reader, and said plate container including an open area of a size for receiving a cash donation or an envelope donation;
(c) a processor for processing information read by said reader;
(d) means for entering a numerical amount representative of a donation;
(e) storage means for storing a plurality of said card information and associated said numerical amounts; and,
(f) a means for transferring information from said storage means.

2. A portable offering plate for use in a religious place to permit an attender to make a donation by an information bearing card, comprising:
(a) a card reader having a card slot for receiving a card, said card reader disposed for providing said card slot in an area for use by the attender, said card reader powered by a portable power supply;
(b) a plate container of a size and weight for allowing the passing thereof from one attender to another attender, said plate container for having means for supporting said card reader, and said plate container including an open area of a size for receiving a cash donation or an envelope donation;
(c) a processor for receiving information read by said reader;
(d) means for entering a numerical amount representative of a donation, said means comprising at least one key representative of a fixed donation amount;
(e) storage means for storing a plurality of said card information and associated said numerical amounts; and,
(f) a means for transferring information from said storage means.

3. A portable offering plate for use in a religious place to permit an attender to make a donation by an information bearing card, comprising:
(a) a card processor comprising a credit card donation processor for accomplishing credit card donation processing based on information stored on said information bearing card and a debit card donation processor for accomplishing debit card donation processing based on information stored on said information bearing card, said card processor energized by a portable battery power source;
(b) a card discriminator for discriminating whether said information bearing card used for making a donation is a credit card or a debit card by reading the information stored on said card;
(c) a donation processing activator for activating any one of said donation processors in response to said card discriminator said means comprising at least one key representative of a fixed donation amount;
(d) means for entering a numerical amount representative of a donation, said means comprising at least one key representative of a fixed donation amount;
(e) storage means for storing a plurality of said card information and associated said numerical amounts; and,
(f) a means for transferring information from said storage means.

4. A stationary offering plate for use in a religious place to permit an attender to make a donation by an information bearing card, comprising:
(a) a card donation processor for reading and processing information on an information bearing card;
(b) a means for entering donation amount information, said means comprising at least one key representative of a fixed donation amount;
(c) a means for associating said donation amount with information on an information bearing card; and,
(d) a means for transmitting said associated donation amount and said information on said information bearing card.

5. A portable offering plate for use in a religious place to permit an attender to make a donation by an information bearing card, comprising:
(a) a card processor for reading and processing information on said information bearing card;
(b) means for entering a numerical amount representative of a donation, said means comprising at least one key representative of a fixed donation amount;
(c) a means for associating donation amount information with information on an information bearing card; and,
(d) a means for transmitting said associated donation amount and said information on said information bearing card.

6. A method of obtaining a plurality of donations during a religious service via an offering plate network, wherein said donations are given by way of an information bearing card and cash, comprising:
(a) providing a first attender a portable offering plate of a size and weight for allowing the passing of said plate from one attender to another attender, wherein said offering plate comprises means for reading information on said information bearing card, wherein said offering plate comprises a means for entering information representative of a donation amount, wherein said offering plate comprises a means for storing information representative of a donation amount and card information, wherein said offering plate network comprises a means for transmitting said information representative of a donation amount and said card information, and wherein said offering plate comprises a surface for receiving a cash donation;
(b) passing said offering plate to a subsequent attender, said subsequent attender placing a cash donation on said surface;
(c) passing said offering plate to a card bearing attender, said card bearing attender passing an information bearing card through said means for reading information from said card and, said card bearing attender entering a donation amount via said means for entering information representative of a donation amount, said offering plate storing said card information and said information representative of a donation amount;
(c) gathering said cash donation from said surface for deposit to an account; and,
(d) transmitting said information representative of a donation amount and card information via said means for transmitting said information representative of a donation amount and card information to a card account processor.

7. An offering plate network for use in a religious place to gather a donation made by an information bearing card, comprising:
(a) means for entering donation amount information, said means for entering donation amount information comprising at least one key representative of a fixed donation amount;
(b) means for entering card information, said means for entering card information comprising a card reader;
(c) storage means for storing said donation amount information and said card information; and,
(d) transmitting means for transmitting said donation amount information and said card information to a card account processor for processing.

8. A offering plate network for use in a religious place to gather a donation made by an information bearing card, comprising:
(a) a off-line offering plate, said offering plate comprising a card reader for reading information stored on said information bearing card, said offering plate comprising a means for entering donation amount information, and said offering plate comprising a storage means for storing information read by said card reader and for storing said donation amount information; and,
(b) a means for post processing said stored card information and said donation information.

9. A method of obtaining a donation made by an information bearing card, comprising the steps of:
(a) passing an information bearing card through a card reader;
(b) reading card information stored on said information bearing card by a card reader;
(c) entering donation amount information;
(d) associating said donation amount with said card information;
(e) storing said associated donation amount and said card information in an off-line offering plate; and,
(f) post processing said associated donation amount and said card information.

10. A method of obtaining a donation at a religious service, comprising the steps of:
(a) passing an information bearing card through a card reader;
(b) reading card information stored on said information bearing card by a card reader;
(c) entering donation amount information;
(d) associating said donation amount with said card information;
(d) storing said associated donation amount and said card information in an off-line offering plate; and,
(e) transmitting said retrieved donation amount and said card information from said off-line offering plate to a card account processor.

11. A method of obtaining a donation, said donation made at a religious service, comprising the steps of:
(a) passing an information bearing card through a card reader;
(b) reading card information stored on said information bearing card by a card reader;
(c) entering donation amount information;
(d) associating said donation amount with said card information;
(d) storing said associated donation amount and said card information in an off-line offering plate;
(e) transmitting said associated donation amount and said card information from said offering plate to a clergy member's terminal; and,
(f) transmitting said associated donation amount and said card information from said clergy member's terminal to a card account processor.

12. A method of obtaining a donation, said donation made at a religious place, comprising:
(a) passing an information bearing card through a card reader, said card reader disposed on a portable battery operated off-line offering plate, said offering plate of a size and weight for allowing the passing thereof from one individual to another individual;
(b) reading card information stored on said information bearing card via said card reader;
(c) entering donation amount information;
(d) associating said donation amount with said card information;
(d) storing said associated donation amount and said card information in a storage device;
(e) transmitting said associated donation amount and said card information from said storage device to a card account processor.

13. A method of obtaining a donation, said donation made by an information bearing card, comprising:
(a) passing an information bearing card through a card reader, said card reader disposed on a portable battery operated offering plate, said offering plate of a size and weight for allowing the passing thereof from one individual to another individual;
(b) reading card information stored on said information bearing card via said card reader;
(c) entering donation amount information by pressing at least one key representative of a fixed donation amount, said key disposed on said offering plate;
(d) associating said donation amount with said card information;
(e) storing said associated donation amount and said card information in a storage device;
(f) transmitting said retrieved donation amount and said card information to a card account processor.

14. A method of obtaining a donation, said donation made by an information bearing card, comprising:
(a) passing an information bearing card through a card reader, said card reader disposed on an offering plate;
(b) reading card information stored on said information bearing card via said card reader;
(c) entering donation amount information by pressing at least one key representative of a fixed donation amount, said key disposed on said storage device;
(d) confirming said donation amount;
(e) associating said donation amount with said card information;
(f) storing said associated donation amount and said card information in a storage device; and,
(h) transmitting said retrieved donation amount and said card information to a card account processor.

15. A portable offering plate for use in a religious service to permit an attender to make an envelope donation, comprising:
(a) a bar code reader disposed on said offering plate for reading information represented by a bar code located on an envelope, said envelope collected by said offering plate; and,
(b) an information gathering device responsive to said bar code reader for storing and processing said information obtained by said bar code reader.

16. An offering plate network for use in a religious place to permit an attender to make a donation, comprising:
(a) at least one portable battery operated off-line offering plate, said portable offering plate comprising a card reader for reading card information from an information bearing card, a means for entering donation amount information, a means for associating said card information and said donation information, a portable storage device for storing said associated card information and donation information, and a means for transmitting said associated card and donation information from said portable storage device;
(b) at least one stationary offering plate comprising a card reader for reading card information from an information bearing card, a means for entering donation amount information, a means for associating said card information and said donation information, a storage means for storing said associated card information and donation information, and a means for transmitting said associated card and donation information from said stationary storage device; and,
(c) a clergy member's terminal, said clergy member's terminal for receiving said associated card and donation information from at least one of said stationary offering plate or said portable offering plate.

17. An offering plate network for use in a religious place to permit an attender to make a donation, comprising:
(a) at least one portable battery operated off-line offering plate, said portable offering plate comprising a card reader for reading card information from an information bearing card, a means for entering donation amount information, a means for associating said card information and said donation information, a storage means for storing said associated card information and donation information, and a means for transmitting said associated card and donation information from said portable storage device;
(b) at least one stationary offering plate comprising a card reader for reading card information from an information bearing card, a means for entering donation amount information, a means for associating said information on said information bearing card and said donation information, a stationary storage device for storing said associated card information and donation information, and a means for transmitting said associated card and donation information from said stationary storage device;
(c) a clergy member's terminal, said clergy member's terminal for receiving said associated card and donation information from at least one of said stationary storage terminal or said portable storage terminal; and,
(d) a communication link between said clergy member's terminal and a card account processor, said communication link for transmitting signals representative of said donation amount and said card information.

18. An offering plate network for use in a religious place to permit an attender to make a donation, comprising:
(a) at least one portable battery operated off-line offering plate, said portable offering plate for accepting donation information, said donation information comprising card information read from an information bearing card by a card reader and donation amount information;
(b) at least one stationary hard wired offering plate, said stationary terminal for accepting donation information, said donation information comprising card information read from information bearing cards and donation amount information;
(c) a clergy member's terminal, said clergy member's terminal for receiving said donation information, and said clergy member's terminal for transmitting said donation information to a card account processor.

19. A method of processing a donation made by an attender at a religious place, said donation made by said attender with an information bearing card at a portable off-line offering plate, comprising the steps of:
(a) obtaining card account information from an attender via a card reader on said offering plate;
(b) obtaining information representative of a donation amount on said offering plate;
(c) storing said card account information and said information representative of a donation amount in a storage means, said storage means disposed on said portable offering plate;
(d) receiving said stored card account information and the donation amount information via a communication link;
(e) entering a debit representative of the donation amount to an account of an attender; and,
(f) entering a credit representative of the donation amount to an account of a religious organization.

20. A method of obtaining a donation via a portable off-line offering plate during a religious service, said donation being processed by a card account processor, wherein the offering plate permits the receipt of the donation by an information bearing card and is of a size and weight which allows the movement of the offering plate from one attender to another another attender, comprising the steps of:
(a) passing said offering plate from one attender to another attender until said offering plate reaches a card bearing attender;
(b) obtaining card account information from said card bearing attender by prompting said card bearing attender to pass said information bearing card through a card reader disposed on said offering plate, said card bearing attender maneuvering said information bearing card through a card reader, said card reader reading card information disposed on said information bearing card;
(c) obtaining information representative of a donation amount from said card bearing attender by prompting said card bearing attender to enter said information representative of a donation amount, said card bearing attender entering said information representative of a donation amount via a donation amount accepting means;
(d) storing said card account information and said information representative of a donation amount in a storage means;
(e) downloading said stored card account information and the donation amount information to a card account processor via a communication link;
(f) entering a debit representative of said authorized donation amount to an account of an attender; and,
(g) entering a credit representative of authorized donation amount to an account of a religious organization.

21. An offering plate network for processing a donation by a card account processor, wherein said donation is made at an offering plate by way of an information bearing card having account information stored thereon, comprising:
(a) a portable offering plate including a card reader and card reader circuitry capable of obtaining card account information from an attender;
(b) means for accepting information representative of a donation amount, said means comprising at least one key representative of a fixed donation amount;
(c) means for transferring card account information and donation amount information to a card account processor;
(d) means responsive to information sent via the transferring means for entering a debit representative of the donation amount information to an account of the attender; and,
(e) means responsive to information sent via the transferring means for entering a credit representative of the donation amount information to an account of an organization.

22. A network for processing a donation by a card account processor via a portable offering plate wherein the offering plate permits the receipt of the donation by an information bearing card having account information stored thereon and includes a surface for receiving a cash or envelope donation, comprising:
(a) a portable offering plate including a card reader and card reader circuitry capable of obtaining card account information from an attender;
(b) means for accepting information representative of a donation amount;
(c) means for transferring card account information and donation amount information to the card account processor;
(d) means responsive to information sent via the transferring means for entering a debit representative of the donation amount information to an account of the attender; and,
(e) means responsive to information sent via the transferring means for entering a credit representative of the donation amount information to an account of an organization.

23. An offering plate network for use in a church place to permit an attender to make a donation, comprising:
(a) an offering plate, said offering plate comprising a card reader for reading card information from an information bearing card, a means for entering donation amount information, a storage means for storing said card information and said donation information, and a means for transmitting said card and donation information from said portable storage device;
(b) a docking station, said offering plate lockably disposed in said docking station;
(c) a clergy member's terminal, said clergy member's terminal for receiving card and donation information from said offering plate; and,
(d) a communication link between said clergy member's terminal and a card account processor, said communication link for transmitting signals representative of said donation amount and said card information.

24. An offering plate network for use in a religious place to permit an attender to make a donation, comprising:
(a) an offering plate, said offering plate comprising a card reader for reading card information from an information bearing card, a means for entering donation amount information, a storage means for storing said card information and said donation information, and a means for transmitting said card and donation information from said portable storage device; and,
(b) a docking station, said offering plate lockably disposed in said docking station, said docking station providing a means for energizing said offering plate, and said docking station providing a means for communicatively linking said offering plate to a card account processor.

25. An offering plate for use in a religious place to permit an attender to make a donation, comprising:
(a) a card reader for reading card information from an information bearing card;
(b) a means for entering donation amount information, said means for entering donation information comprising at least one key representative of a fixed donation amount, said means comprising at least one key representative of a single digit integer, said means comprising a confirmation key, and said means comprising a negation key; and,
(c) storage means for storing said card information and said donation information.

26. A method of soliciting a donation from an attender at a religious place, said solicitation made by an offering plate accepting an information bearing card, said offering plate comprising a means for reading said information bearing card, said offering plate comprising a means for obtaining information representative of a donation amount, said offering plate comprising a means for transmitting said card information and said information representative of a donation amount to a card account processor, comprising the steps of:
(a) prompting an attender to pass an information bearing card through a card reader;
(b) prompting an attender to enter information representative of a donation amount; and,
(c) prompting said attender to verify said information representative of a donation amount.

27. An offering plate for soliciting a donation from an attender at a religious place, said offering plate accepting a donation made by way of an information bearing card, comprising:
(a) a display;
(b) a message prompt appearing on said display, requesting an attender to pass an information bearing card through a card reader;
(c) a message prompt appearing on said display requesting an attender to enter information representative of a donation amount; and,
(d) a message prompt appearing on said display requesting said attender to verify said information representative of a donation amount.

28. An offering plate network for gather a cash donation and a donation made by information bearing cards, said network comprising:
(a) an offering station, said offering station comprising an offering plate for accepting card information given by way of an information bearing card, a docking station, said offering plate lockably disposed in said docking station; and,
(b) means for entering information representative of a donation amount, said information representative of a donation amount being pre-pledged by an attender;
(c) means for associating said pre-pledged information representative of a donation amount with an attender's card information; and,
(c) a means for transmitting said associated card information and said information representative of a donation amount to a card account processor, said card account processor entering a debit representative of said donation amount to an account of an attender, and said card account processor entering a credit representative of a donation amount to an account of a religious organization.

29. An envelope box for obtaining a cash donation and a donation by an information bearing card, said envelope box for use by a religious organization, said envelope box comprising:
(a) an offering plate for accepting card information given by way of an information bearing card;
(b) a docking station, said offering plate lockably diposed in said docking station;
(c) a slot for accepting cash donations, said slot disposed on said envelope box for access by said an attender; and,
(d) a storage volume for retaining cash donations.

30. A portable offering plate for use in a religious place to permit an attender to make a donation, comprising:
(a) a means for entering donation data, said donation data comprising card information representative of account information and information representative of donation amount information;
(b) storage means for storing said donation data, said storage means for storing at least twenty five said donation data; and,
(c) transferring means for transferring said donation data to a card account processor.

31. A portable offering plate for use by a charitable organization to permit a contributor to make a donation by way of an information bearing card, comprising:
(a) a means for entering donation data, said donation data comprising card information representative of account information and information representative of donation amount information;
(b) storage means for storing said donation data, said storage means for storing at least ten said donation data; and,
(c) transferring means for transferring said donation data to a card account processor.

32. A portable offering plate for use by a charitable organization to permit a contributor to make a donation by way of an information bearing card, comprising:
(a) a means for entering donation data, said donation data comprising card information representative of account information and information representative of donation amount information; and,
(b) storage means for storing said donation data, said storage means for storing at least fifty said donation data.
